# FASCICULE DE BREVET EUROPEEN

(11) **EP 1 324 469 B1**
(45) Date de publication et mention de la délivrance du brevet: **30.06.2004**
(21) Numéro de dépôt: 02360340.0
(22) Date de dépôt: 09.12.2002
(51) Int. Cl.: H02K 11/02

(54) **Moteur électrique à collecteur équipé d'un dispositif de réduction des perturbations électromagnétiques**
Elektrischer Kommutatormotor mit Vorrichtung zur Verringerung von elektromagnetischen Störungen
Electric commutator motor featuring an electromagnetic interference reduction device

(30) Priorité: 10.12.2001 FR 0115918
(43) Date de publication de la demande: 02.07.2003
(73) Titulaire: Leblanc, Gérard, 78840 Moisson (FR)
(72) Inventeur: Leblanc, Gérard, 78840 Moisson (FR)
(74) Mandataire: Nithardt, Roland

(56) Documents cités:
- EP-A- 0 658 961
- GB-A- 933 442
- GB-A- 2 003 330
- US-A- 5 231 322

## Description

La présente invention concerne un moteur électrique à collecteur équipé d'un dispositif de réduction des perturbations électromagnétiques, ce moteur comportant au moins deux balais agencés pour frotter sur le collecteur, ces balais étant chacun monté dans un porte-balai selon un axe A et sollicité en direction dudit collecteur par au moins un organe ressort d'axe B, le dispositif de réduction des perturbations électromagnétiques comportant au moins une bobine à induction reliée à un circuit d'alimentation électrique.

Les moteurs électriques à collecteur sont bien connus et peuvent être soit des moteurs à courant continu, soit des moteurs à courant alternatif possédant un rotor pourvu d'un induit et un stator pourvu d'au moins un inducteur. Le collecteur est un ensemble de lames conductrices isolées les unes des autres et reliées aux sections du bobinage formant l'induit du moteur. Ces lames conductrices sont assemblées pour former un bloc cylindrique sur lequel frottent des balais appelés communément des charbons, ces balais étant habituellement constitués de petits blocs de graphite sollicités par des organes ressort.

Le collecteur permet le passage du courant entre une partie fixe et une partie mobile du moteur, soit des balais vers l'induit pour l'alimenter en version moteur, soit de l'induit vers les balais pour redresser le courant induit en version génératrice. Cependant lors du passage du courant entre les balais qui sont habituellement fixes et le collecteur qui tourne habituellement à très grande vitesse, par exemple entre 25 et 40 000 tours/mn, la commutation électrique n'est pas franche, elle est intermittente à fréquence élevée et génère des perturbations électromagnétiques qui se répercutent sur les caractéristiques de fonctionnement du moteur. Pour réduire ces perturbations électromagnétiques parasites, il est connu d'ajouter, dans le circuit électrique d'alimentation du collecteur, des self-inductances et/ou des condensateurs et/ou tout autre composant électromagnétique. Outre leur prix de revient, ces composants, qui sont des pièces rapportées, compliquent l'assemblage du moteur et génèrent des sources potentielles de défaut, réduisant la qualité du moteur.

Les solutions décrites notamment dans les publications GB-A-933 442 et GB-A-2 003 330 prévoient d'utiliser les organes ressort des balais, constitués de ressorts hélicoïdaux, comme bobine à induction, associés à un noyau magnétique, ces organes ressort étant couplés électriquement au circuit du collecteur. Dans ces réalisations, les organes ressort, les noyaux magnétiques et les balais sont alignés sur un même axe et guidés dans un logement prévu dans le porte-balai. Cette disposition permet donc un déplacement linéaire de l'une ou l'autre partie à l'intérieur du logement dans l'axe du balai, ce déplacement étant tributaire de l'usure du balai. De ce fait, les performances techniques de ce type de dispositif anti-parasite peuvent ne pas être constantes dans le temps puisque la longueur du noyau magnétique et celle du ressort hélicoïdal varient en fonction de l'usure des balais, ce qui a pour conséquence de modifier le coefficient d'inductance de la bobine à induction. Par ailleurs, ce dispositif est relativement complexe à monter, l'accès au porte-balai étant difficile. De plus, il génère un encombrement radial important par rapport au collecteur non adapté à certaines applications.

La présente invention vise à pallier ces inconvénients en proposant un moteur électrique à collecteur équipé d'un dispositif anti-parasitage intégré, sans composant électromagnétique rapporté, simple, très économique, efficace, très fiable, donnant des résultats constants dans le temps puisque non dépendants de l'usure des balais, facile à monter, simple d'accès et peu encombrant.

Dans ce but, l'invention concerne un moteur électrique du genre indiqué en préambule, caractérisé en ce que l'axe B de l'organe ressort est distinct de l'axe A du balai, en ce que l'organe ressort comporte au moins une portion hélicoïdale d'axe B et deux extrémités radiales, une des extrémités étant connectée à une borne de raccordement électrique et l'autre extrémité étant en appui sur ledit balai, et en ce qu'au moins une partie de ladite portion hélicoïdale constitue ladite bobine à induction.

De manière préférentielle, ladite portion hélicoïdale est formée d'au moins un élément allongé métallique à âme pleine enroulé en spires, les spires étant isolées électriquement les unes des autres par un isolant. Si les spires sont non jointives, l'isolant peut être formé par l'air, sinon il peut être constitué par un revêtement électriquement isolant entourant ledit élément allongé métallique.

Dans une forme de réalisation préférée, la borne de raccordement électrique fait partie du circuit d'alimentation dudit collecteur, l'organe ressort étant monté en série dans ce circuit.

Dans la forme de réalisation préférée, le dispositif de réduction des perturbations électromagnétiques comporte au moins un noyau magnétique disposé à l'intérieur de la portion hélicoïdale de l'organe ressort.

L'organe ressort est avantageusement monté sur une partie saillante dudit porte-balai, cette partie saillante étant pourvue d'un alésage pour recevoir un axe de maintien et de guidage dudit organe ressort, cet axe étant logé à l'intérieur de sa portion hélicoïdale.

Le noyau peut, dans ce cas, être formé d'au moins une partie dudit axe de maintien et de guidage de l'organe ressort.

La présente invention et ses avantages apparaîtront mieux dans la description suivante d'un exemple de réalisation, en référence aux dessins annexés, dans lesquels:

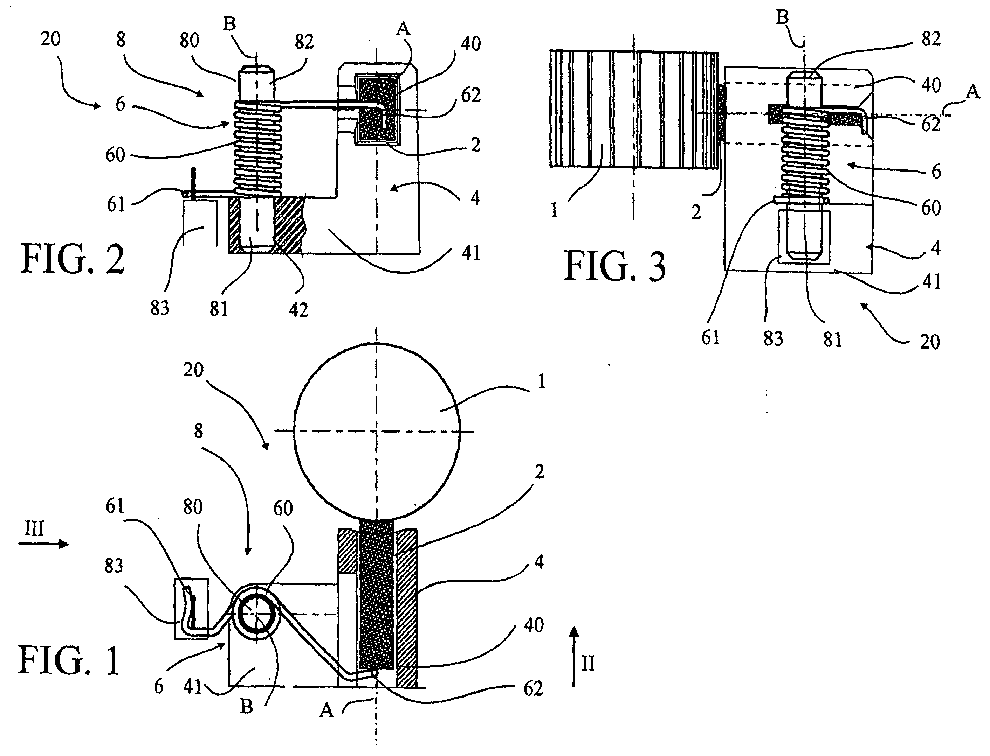

- la figure 1 est une vue en coupe d'une forme de réalisation d'un moteur électrique à collecteur selon l'invention, et
- les figures 2 et 3 sont des vues respectivement suivant les flèches II et III du moteur de la figure 1.

En référence aux figures, le moteur électrique à collecteur 20 selon l'invention n'est pas représenté dans sa totalité. Pour une question de clarté des figures, seul est représenté le collecteur 1 coopérant avec un balai 2 monté dans un porte-balai 4. Le moteur électrique 20 concerné par l'invention peut être tout type de moteur électrique à courant continu ou à courant alternatif, formé d'un rotor et d'un stator coaxiaux et logés dans une carcasse, le rotor possédant un induit couplé électriquement à un collecteur et le stator possédant au moins un inducteur. De manière habituelle, le rotor est sensiblement cylindrique et mobile en rotation à l'intérieur du stator fixe. On peut dans certains cas prévoir que le rotor est annulaire et mobile en rotation autour d'un stator sensiblement cylindrique et fixe.

Dans tous les cas, le collecteur 1 est associé à au moins deux balais 2 d'axe A, chacun étant formé d'un bloc en graphite et sollicité par un organe ressort 6 en direction du collecteur 1. Cet organe ressort 6 a pour fonction de garantir une pression suffisante du balai 2 sur le collecteur 1 afin d'assurer un bon contact électrique entre eux et une bonne commutation électrique sans coupure, ni arc électrique.

Dans les figures, l'organe ressort 6 est constitué d'un ressort à action angulaire. Il comporte une portion cylindrique hélicoïdale 60 d'axe B distinct de l'axe A du balai 2 et deux extrémités 61, 62 s'étendant radialement, une 61 étant fixée au porte-balai 5 et l'autre 62 étant en appui sur le balai 2 et apte à exercer une force de pression dirigée dans l'axe du balai 2 en direction du collecteur 1. Dans ce cas, le porte-balai 4 comporte au moins un logement de guidage 40 d'axe A pour le balai 2 et une portion saillante 41 sur laquelle est monté l'organe ressort 6 selon l'axe B.

Selon l'invention, on utilise avantageusement au moins un des organes ressort 6 existant, associé à un balai 2 pour réaliser un dispositif de réduction des perturbations électromagnétiques 8 intégré et non rapporté dans ledit moteur électrique 20. A cet effet, on alimente en courant électrique cet organe ressort 6 par un circuit d'alimentation électrique et notamment le circuit d'alimentation du collecteur 1. Cet organe ressort 6, qui est constitué au moins en partie d'une portion cylindrique hélicoïdale 60 formée d'un élément allongé métallique à âme pleine enroulé en spires non jointives, se transforme en une bobine à induction à air, sans noyau. Une des extrémités 61 de l'organe ressort 6 est connectée au circuit d'alimentation du collecteur 1 par une borne de raccordement 83, l'autre extrémité 62 étant connectée électriquement au balai 2 qui lui est associé, lui-même étant en contact électrique avec le collecteur 1. Ainsi, l'organe ressort 6 est monté en série avec le balai 2. L'élément allongé métallique utilisé pour former la portion hélicoïdale 60 de l'organe ressort 6 est par conséquent choisi pour avoir des caractéristiques ressort et de conduction électrique. Cet élément allongé métallique peut être un fil conducteur ou tout autre profil adapté. Il est par exemple réalisé en fer, en cuivre, en alliage métallique ou en toute autre matière équivalente. Il peut être ou non entouré d'un revêtement électriquement isolant, tel qu'un vernis, une gaine synthétique ou tout autre isolant équivalent. Si cet élément allongé métallique n'est pas entouré d'un revêtement isolant, la portion hélicoïdale 60 doit alors être formée de spires non jointives, l'isolation électrique étant assurée par l'air ambiant.

Pour augmenter le coefficient d'induction L de la bobine à induction formée par la portion hélicoïdale 60 de l'organe ressort 6, on ajoute un noyau 80 réalisé dans un matériau présentant une certaine résistance magnétique par exemple en fer, en ferrite ou toute autre matière équivalente. Ce noyau 80 peut avoir des formes diverses mais a, dans l'exemple illustré, une forme cylindrique et est logé à l'intérieur d'au moins une partie de la portion hélicoïdale 60 de l'organe ressort 6.

Dans les figures, le noyau 80 est fixe et formé d'une simple tige cylindrique. II comporte une extrémité 81 logée en force dans un alésage 42 prévu dans la portion saillante 41 du porte-balai 4 et une extrémité libre 82 saillante de la portion hélicoïdale 60 de l'organe ressort 6. Ce noyau 80 constitue également l'axe de maintien et de guidage de cet organe ressort 6.

L'organe ressort 6 utilisé comme bobine à induction peut avoir des formes différentes selon le mode de construction du moteur électrique à collecteur 20. Il est par exemple être du type ressort à action angulaire. Dans tous les cas, il présente une portion hélicoïdale formée par un élément allongé métallique à âme pleine enroulé en spires jointes ou non, cette partie hélicoïdale étant alimentée électriquement pour former une bobine à induction.

Dans le mode de réalisation tel que décrit, le noyau 80 est fixe et la portion hélicoïdale 60, qui l'entoure formant la bobine à induction, présente une longueur invariable quelle que soit l'usure du balai 2, ce qui permet de garantir un coefficient d'inductance du dispositif de réduction des perturbations électromagnétiques 8 constant dans le temps.

Il ressort clairement de cette description que l'invention permet de résoudre simplement le problème posé en utilisant au moins un composant existant dans un moteur électrique à collecteur traditionnel et en attribuant à ce composant une fonction supplémentaire, ce composant étant désaxé par rapport au balai et donc indépendant de l'usure de ce balai. Cette particularité permet d'intégrer dans le moteur électrique à collecteur un dispositif de réduction des perturbations électromagnétiques à moindre coût, sans composant électromagnétique ajouté et sans générer de sources potentielles de défaut, fiable et très facile à monter.

La présente invention n'est pas limitée à l'exemple de réalisation décrit mais s'étend à toute modification et variante évidentes pour un homme du métier tout en restant dans l'étendue de la protection définie dans les revendications annexées.

## Revendications

1. Moteur électrique à collecteur (20) équipé d'un dispositif de réduction des perturbations électromagnétiques (8), ce moteur comportant au moins deux balais (2) agencés pour frotter sur le collecteur (1), ces balais étant chacun monté dans un porte-balai (4) selon un axe A et sollicité en direction dudit collecteur (1) par au moins un organe ressort (6) d'axe B, ledit dispositif de réduction des perturbations électromagnétiques (8) comportant au moins une bobine à induction reliée à un circuit d'alimentation électrique, **caractérisé en ce que** l'axe B dudit organe ressort (6) est distinct de l'axe A dudit balai (2), **en ce que** ledit organe ressort (6) comporte au moins une portion hélicoïdale (60) d'axe B et deux extrémités (61, 62) radiales, une des extrémités (61) étant connectée à une borne de raccordement électrique (83) et l'autre extrémité (62) étant en appui sur ledit balai (2), et **en ce qu'**au moins une partie de ladite portion hélicoïdale (60) constitue ladite bobine à induction.

2. Moteur électrique selon la revendication 1, **caractérisé en ce qu'**au moins ladite portion hélicoïdale (60) est formée d'au moins un élément allongé métallique à âme pleine enroulé en spires, les spires étant isolées électriquement les unes des autres par un isolant.

3. Moteur électrique selon la revendication 2, **caractérisé en ce que** les spires sont non jointives et **en ce que** l'isolant est formé par l'air.

4. Moteur électrique selon la revendication 2, **caractérisé en ce que** l'isolant est constitué par un revêtement électriquement isolant entourant ledit élément allongé métallique.

5. Moteur électrique selon la revendication 1, **caractérisé en ce que** la borne de raccordement électrique (83) fait partie du circuit d'alimentation dudit collecteur (1.

6. Moteur électrique selon la revendication 1, **caractérisé en ce que** ledit organe ressort (6) est monté en série dans ledit circuit d'alimentation dudit collecteur (1).

7. Moteur électrique selon la revendication 1, **caractérisé en ce que** ledit dispositif de réduction des perturbations électromagnétiques (8) comporte au moins un noyau (80) magnétique disposé à l'intérieur de ladite portion hélicoïdale (60) dudit organe ressort (6).

8. Moteur électrique selon la revendication 1, **caractérisé en ce que** ledit organe ressort (6) est monté sur une partie saillante (41) dudit porte-balai (4), cette partie saillante (41) étant pourvue d'un alésage (42) pour recevoir un axe de maintien et de guidage dudit organe ressort (6), cet axe étant logé à l'intérieur de ladite portion hélicoïdale (60).

9. Moteur électrique selon les revendications 7 et 8, **caractérisé en ce que** le noyau (80) est formé d'au moins une partie dudit axe de maintien et de guidage de l'organe ressort (6).

## Claims

1. An electric commutator motor (20) equipped with a device for reducing electromagnetic interference (8), this motor comprising at least two brushes (2) designed to rub against the commutator (1), these brushes each being mounted in a brush holder (4) along an axis A and stressed in the direction of the said commutator (1) by at least one spring member (6) having an axis B, the said device for reducing electromagnetic interference (8) comprising at least one induction coil connected to a power supply circuit, **characterised in that** the axis B of the said spring member (6) is separate from the axis A of the said brush (2), **in that** the said spring member (6) comprises at least one helical portion (60) having axis B and two radial ends (61, 62), one of the ends (61) being connected to an electric connecting terminal (83) and the other end (62) resting on the said brush (2), and **in that** at least one part of the said helical portion (60) forms the said induction coil.

2. An electric motor according to Claim 1, **characterised in that** at least the said helical portion (60) is formed by at least one elongate metallic member with a solid core wound in turns, the turns being electrically insulated from one another by an insulator.

3. An electric motor according to Claim 2, **characterised in that** the turns are not contiguous and **in that** the insulator is formed by air.

4. An electric motor according to Claim 2, **characterised in that** the insulator is formed by an electrically insulating covering surrounding the said elongate metallic member.

5. An electric motor according to Claim 1, **characterised in that** the electric connecting terminal (83) forms part of the supply circuit of the said commutator (1.

6. An electric motor according to Claim 1, **characterised in that** the said spring member (6) is mounted in series in the said supply circuit of the said commutator (1).

7. An electric motor according to Claim 1, **characterised in that** the said device for reducing electromagnetic interference (8) comprises at least one magnetic core (80) disposed inside the said helical portion (60) of the said spring member (6).

8. An electric motor according to Claim 1, **characterised in that** the said spring member (6) is mounted on a projecting part (41) of the said brush holder (4), this projecting part (41) being provided with a bore (42) to receive a pin for holding and guiding the said spring member (6), this pin being housed inside the said helical portion (60).;

9. An electric motor according to Claims 7 and 8, **characterised in that** the core (80) is formed by at least one part of the said pin for holding and guiding the spring member (6).

## Patentansprüche

1. Elektrischer Kommutatormotor (20) mit einer Vorrichtung (8) zur Verringerung von elektromagnetischen Störungen, wobei der Motor mindestens zwei Schleifkontakte (2) aufweist, die so angeordnet sind, dass sie auf dem Kommutator (1) schleifen, wobei die Schleifkontakte jeweils in einem Schleifkontaktträger (4) gemäß einer Achse A angebracht und in Richtung des Kommutators (1) durch mindestens ein Federbauteil (6) mit einer Achse B belastet sind, wobei die Vorrichtung (8) zur Verringerung von elektromagnetischen Störungen mindestens eine mit einem elektrischen Versorgungsstromkreis verbundene Induktionsspule aufweist, **dadurch gekennzeichnet, dass** die Achse B des Federbauteils (6) von der Achse A des Schleifkontaktes (2) getrennt ist, dass das Federbauteil (6) mindestens einen spiralförmigen Abschnitt (60) mit einer Achse B und zwei radialen äußersten Enden (61,62) aufweist, wobei eines der äußersten Enden (61) mit einer Elektroanschlussklemme (83) verbunden ist und das andere Ende (62) auf dem Schleifkontakt (2) aufliegt und mindestens ein Teil des spiralförmigen Abschnittes (60) die Induktionsspule ausbildet.

2. Elektromotor nach Anspruch 1, **dadurch gekennzeichnet, dass** mindestens der spiralförmige Abschnitt (60) aus mindestens einem in Form von Windungen aufgerollten, länglichen Metallbauteil mit massivem Kern ausgebildet ist, wobei die Windungen jeweils durch ein Isoliermaterial elektrisch voneinander isoliert sind.

3. Elektromotor nach Anspruch 2, **dadurch gekennzeichnet, dass** die Windungen nicht aneinander anliegen, und dass das Isoliermaterial durch Luft gebildet ist.

4. Elektromotor nach Anspruch 2, **dadurch gekennzeichnet, dass** das Isoliermaterial aus einem das längliche Metallbauteil umgebenden, elektrisch isolierenden Überzug besteht.

5. Elektromotor nach Anspruch 1, **dadurch gekennzeichnet, dass** die Elektroanschlussklemme (83) Teil des Versorgungsstromkreises des Kommutators (1) ist.

6. Elektromotor nach Anspruch 1, **dadurch gekennzeichnet, dass** das Federbauteil (6) in dem Versorgungsstromkreis des Kommutators (1) in Reihe angebracht ist.

7. Elektromotor nach Anspruch 1, **dadurch gekennzeichnet, dass** die Vorrichtung (8) zur Verringerung von elektromagnetischen Störungen mindestens einen im Inneren des spiralförmigen Abschnittes (60) des Federbauteils (6) angeordneten Magnetkern (80) aufweist.

8. Elektromotor nach Anspruch 1, **dadurch gekennzeichnet, dass** das Federbauteil (6) auf einem herausragenden Teil (41) des Schleifkontaktträgers (4) angebracht ist, wobei der herausragende Teil (41) mit einer Bohrung (42) zur Aufnahme einer Achse zum Halten und Führen des Federbauteils (6) versehen ist, wobei die Achse im Inneren des spiralförmigen Abschnittes (60) gelagert ist.

9. Elektromotor nach den Ansprüchen 7 und 8, **dadurch gekennzeichnet, dass** der Kern (80) aus mindestens einem Teil der Achse zum Halten und Führen des Federbauteils (6) ausgebildet ist.
